# DEMANDE DE BREVET EUROPEEN

(11) **EP 4 494 786 A1**
(43) Date de publication de la demande: **22.01.2025**
(21) Numéro de dépôt: 24188515.1
(22) Date de dépôt: 15.07.2024
(51) Int. Cl.: B22F 10/368, B22F 10/28, B22F 10/38, B22F 12/90, B33Y 30/00, B33Y 50/02, G01N 25/72

(54) **MÉTHODE ET DISPOSITIF DE CONTRÔLE POUR LA DÉTECTION D`ANOMALIES THERMIQUES DE PROCÉDÉ DE FABRICATION ADDITIVE**

(30) Priorité: 17.07.2023 FR 2307615
(71) Demandeur: Commissariat à l'Energie Atomique et aux Energies Alternatives, 75015 Paris (FR)
(72) Inventeur: GARANDET, Jean-Paul, 38059 GRENOBLE CEDEX 09 (FR); BONNEFOY, Vincent, 38054 GRENOBLE CEDEX 09 (FR); LE BOURDAIS, Florian, 38054 GRENOBLE CEDEX 09 (FR); PALLA, Marie, 38054 GRENOBLE CEDEX 09 (FR); ROUX, Guilhem, 38054 GRENOBLE CEDEX 09 (FR)
(74) Mandataire: Cabinet Camus Lebkiri

(57) **Abrégé**

Un aspect de l'invention concerne une méthode de détection d'une anomalie thermique d'un procédé de fabrication d'une pièce témoin (4), le procédé de fabrication étant mis en oeuvre au moyen d'une machine (1) de fabrication additive par fusion de chaque dépôt d'une pluralité de dépôts successifs d'un lit de poudre.

## Description

### DOMAINE TECHNIQUE DE L'INVENTION

Le domaine technique de l'invention est celui du contrôle non-destructif pour de la fabrication additive par fusion de lit de poudre.

En particulier, l'invention concerne une méthode et un dispositif de détection d'une anomalie thermique d'un procédé de fabrication additive.

### ARRIERE-PLAN TECHNOLOGIQUE DE L'INVENTION

En fabrication additive, les procédés basés sur la fusion d'un lit de poudre, tels que la Fusion Laser sur Lit de Poudre (FLLP), la fusion par faisceau d'électrons (EBM pour « Electron Beam Melting »), le jet de liant (BJ pour « Binder Jetting ») et la fusion multi-jets (MJF pour « Multi Jet Fusion ») consistent à apporter de l'énergie localement sur le lit de poudre pour fusionner (FLLP, EBM, MJF) ou polymériser (BJ) au moins une partie du lit de poudre et former, couche après couche, une pièce désirée. Ces procédés permettent une grande flexibilité de fabrication mais sont également sujets, à diverses échelles de temps, à des anomalies du procédé de fabrication, notamment liées à la puissance reçue par les pièces. Il est donc fondamental, pour garantir la qualité des pièces fabriquées et la répétabilité du procédé, de pouvoir évaluer in situ et en temps réel ces fluctuations. En particulier, cette surveillance en continue doit permettre de détecter des variations rapides (e.g. sauts de puissance) ou lentes (dérives) des paramètres du procédé.

Il est connu d'utiliser un rayonnement infra-rouge au cours de la fabrication pour détecter des anomalies de fabrication. Par exemple, il est connu d'utiliser des photodiodes pour acquérir une intensité émise par l'environnement de la piscine de fusion et détecter une anomalie par l'analyse de ce signal et comparaison à des valeurs de référence (K. Taherkhani et al., Development of a defect-detection platform using photodiode signals collected from the melt pool of laser powder-bed fusion, Additive Manufacturing, vol. 46, 102152, 2021). Un inconvénient de cette approche est que l'exercice doit être réalisé pour chaque équipement de fabrication additive, chaque géométrie de pièce, chaque configuration des paramètres du procédé et chaque matériau de la pièce, du fait que les performances de détection dépendent fortement des conditions de fabrication. Cette approche est donc difficilement exploitable dans un environnement industriel à haute cadence de fabrication.

Alternativement, il est connu de détecter ce rayonnement infra-rouge au moyen d'une caméra infra-rouge sensible dans la gamme dite « mid-wave », c'est-à-dire entre 2 et 5.7 µm (G. Mohr et al., In-Situ Defect Detection in Laser Powder Bed Fusion by Using Thermography and Optical Tomography-Comparison to Computed Tomography, Metals, vol.10, 103, 2020), ou sensible à l'infrarouge lointain, c'est-à-dire entre 8 et 14 µm (J.L. Bartlett, In situ defect détection in sélective laser melting via full-field infrared thermography, Additive Manufacturing, vol. 24, p. 595-605, 2018). Un avantage de ces approches est d'acquérir une image couvrant une surface significative de la pièce en cours de fabrication, au détriment d'un grand volume de données à acquérir, stocker et analyser. Un autre inconvénient majeur est que ces approches sont peu fiables du fait qu'elles présentent un nombre non négligeable de faux positifs (défauts détectés alors que la pièce est saine) et de faux négatifs (défauts non détectés alors que la pièce est défectueuse).

Par ailleurs, il est connu de détecter une anomalie de fabrication par analyse de signaux ultrasonores acquis au cours de la fabrication (EP3658377A1 et H. Rieder et al., On- and offline ultrasonic characterization of components built by SLM additive manufacturing, 42nd Annual Review of Progress in Quantitative Nondestructive Evaluation, AIP Conf. Proc., vol. 1706, p. 130002-1-130002-7, 2016). Ces approches visent à l'identification de défauts sur les pièces en cours de fabrication et non à détecter des défauts du procédé de fabrication en lui-même.

Il existe donc un besoin d'un moyen fiable, in-situ et rapide pour détecter des variations ou anomalies d'un procédé de fabrication additive par fusion d'un lit de poudre.

### RESUME DE L'INVENTION

L'invention offre une solution aux problèmes évoqués précédemment, en permettant la détection d'une anomalie thermique d'un procédé de fabrication additive par l'évaluation d'une caractéristique du refroidissement d'une pièce témoin au cours de sa fabrication. Cette caractéristique peut être une cinétique ou une amplitude d'un signal acquis à partir d'un capteur lors de la phase de refroidissement.

Un aspect de l'invention concerne ainsi une méthode de détection d'une anomalie thermique d'un procédé de fabrication, le procédé de fabrication étant mis en oeuvre au moyen d'une machine de fabrication additive par consolidation de chaque dépôt d'une pluralité de dépôts successifs d'un lit de poudre pour notamment la réalisation d'une pièce, dite pièce témoin, ladite méthode comprenant, après la consolidation d'au moins un dépôt de la pluralité de dépôts :
- Obtenir un signal sensible à une variation de température du dépôt consolidé de la pièce témoin, le signal étant acquis au cours de la fabrication de la pièce témoin par le procédé de fabrication ;
- Déterminer, à partir d'une métrique déterminée à partir du signal obtenu, une donnée de refroidissement, la donnée de refroidissement étant une caractéristique quantifiable de la dynamique de refroidissement du dépôt consolidé avant le dépôt suivant de la pluralité de dépôts ;
- Comparer la donnée de refroidissement à une valeur de référence ; et
- Détecter l'anomalie thermique du procédé de fabrication lorsque la donnée de refroidissement est éloignée de la valeur de référence.

On entend par « fabrication additive » la fabrication d'une pièce par assemblage d'un ou plusieurs matériaux déposés sous formes de couches ou passes successives. Parmi les procédé de fabrication additive, on s'intéresse en particulier à ceux reposant sur le principe de fusion et de refroidissement de la matière, dont le dépôt sous forme pulvérulente est appelé « lit de poudre ». Dans le cas des procédés Fusion Laser sur Lit de Poudre (FLLP) et fusion par faisceau d'électrons (EBM), une passe ou couche comprend alors un dépôt du lit de poudre et la fusion de ce dépôt aux endroits où la poudre doit être consolidée. Dans le cas du procédé de fusion multi-jets (MJF), une couche comprend le dépôt et la fusion d'un agent fusible spécifique déposé aux endroits où l'agent fusible doit être consolidé. De façon similaire, dans le cas du procédé Binder Jetting (BJ), une couche comprend le dépôt et la polymérisation par apport de chaleur d'un liant par déposé aux endroits où le liant doit être consolidée. Un procédé de fabrication est donc associé à une technologie de fabrication spécifique (FLLP, EBM, MJF, BJ etc.) et à un jeu de paramètres définissant la mise en oeuvre de la fabrication pour une ou plusieurs pièces spécifiques.

On entend par « anomalie thermique du procédé de fabrication » une altération de fonctionnement de l'un des éléments constitutifs de la machine de fabrication additive réalisant la fabrication. Ce dysfonctionnement est, par exemple, produit par une modification d'un paramètre de fonctionnement d'un de ces éléments. Par exemple, il peut s'agir d'une variation de la puissance délivrée par la source servant à la fusion, telle qu'une variation à échelle de temps courte engendrant un sur-apport ou un sous-apport d'énergie pour la fusion, comparativement au fonctionnement nominal de la source lorsqu'aucune anomalie thermique n'a lieu. Une telle variation de puissance est également possible à longue échelle de temps où ladite puissance délivrée par la source et reçue par la pièce décroît progressivement, du fait de l'utilisation même de la machine, par exemple si des dépôts de fumée ont lieu sur les optiques ; on parle alors de « dérive » de puissance. Un autre exemple de dysfonctionnement est une variation de la vitesse du mécanisme de déplacement du spot laser sur la pièce pour la fusion, engendrant également un sur-apport ou un sous-apport d'énergie. Un sur-apport ou un sous-apport d'énergie se traduit par une modification des mécanismes de refroidissement de la couche fusionnée de la pièce, avant dépôt de la couche suivante, comparativement à une valeur de référence de la caractéristique de refroidissement lorsque la source est dans un fonctionnement nominal. D'autres exemples de dysfonctionnement portent sur la non-réalisation aléatoire d'une ou plusieurs passes, ou vecteurs, qui ne sont alors pas ou mal fusionnées.

On entend par « pièce témoin » une pièce fabriquée seule ou en parallèle d'une ou d'une pluralité de pièces à fabriquer, ladite pièce témoin étant de géométrie simple et de caractéristiques géométriques permettant une détection rapide, simple et fiable d'une anomalie thermique du procédé de fabrication.

On entend par « signal sensible à une variation de température » un signal mesurant une propriété physique dépendante, notamment, de la température de la pièce témoin. Le capteur servant à l'acquisition de ce signal est donc apte à capter un tel signal.

On entend par « valeur de référence » une valeur de même dimension que la donnée de refroidissement et qui correspond à une donnée de refroidissement de la cinématique de refroidissement de la pièce témoin, telle une amplitude de variation d'une métrique du signal ou un temps caractéristique de refroidissement, lorsqu'aucune anomalie thermique n'a lieu. La valeur de référence peut être, par exemple, au moyen d'un outil numérique de simulation ou provenir d'une campagne de mesure sur une pluralité de pièces témoin saines, c'est-à-dire de pièces de référence pour lesquelles aucune anomalie thermique du procédé de fabrication n'a été détectée. L'absence d'anomalies thermiques pour ces pièces de référence est, par exemple, contrôlée par un moyen de contrôle autre que celui proposé dans la présente méthode, par exemple par un contrôle non-destructif ou destructif post-fabrication ou au cours de la fabrication

La donnée de refroidissement est « éloignée » de la valeur de référence lorsqu'une distance entre la donnée de refroidissement déterminée et la valeur de référence est supérieure ou égale à un seuil prédéterminé. Ce seuil prédéterminé est défini par un opérateur en fonction de ses connaissances et/ou de contraintes de fabrication sur la base de fabrications antérieures d'autres pièces, telles que d'autres pièces témoin, et/ou de données issues d'une simulation numérique.

Grâce à l'invention, il est possible de déterminer sur la pièce témoin une donnée de refroidissement quantifiant de la cinématique de refroidissement du dépôt consolidé à la suite de la fusion d'une couche de poudre et avant le dépôt suivant de la pluralité de dépôts. Cette donnée de refroidissement renseigne sur l'énergie dissipée par la pièce témoin après la fusion, ainsi que sur la quantité d'énergie apportée par la source sur la pièce, puisque le signal obtenu est sensible à la température de ladite pièce. Ainsi, grâce à l'invention, il est possible de détecter une anomalie thermique du procédé de fabrication par la détermination de la donnée de refroidissement. En particulier, la méthode permet de détecter une variation à échelle de temps courte ou longue de la puissance reçue par la pièce témoin qui, dans un cas idéal, est constante tout au long de sa fabrication.

Il est possible de fabriquer cette pièce témoin en un ou plusieurs exemplaires, par exemple, pour des besoins de maintenance, de certification ou de contrôle du fonctionnement de la machine de fabrication additive. Alternativement, cette pièce témoin peut être conjointement fabriquée, en un ou plusieurs exemplaires, avec une autre pièce ou une pluralité d'autres pièces. Un intérêt est de mettre en oeuvre la méthode proposée en parallèle de la fabrication d'une ou plusieurs autres pièces désirées et de détecter, par exemple dans un contexte de production, une anomalie thermique du procédé de fabrication afin d'effectuer en quasi-temps réel une action corrective pour corriger l'anomalie thermique ou une conséquence de celle-ci. Une conséquence de l'anomalie thermique est par exemple un défaut de fabrication dans la pièce tel un défaut de fusion d'une couche, une forte porosité due à un sous apport d'énergie (« lack of fusion » en anglais) ou à un sur apport d'énergie (« keyhole » en anglais).

La méthode est simple et rapide à mettre en oeuvre puisqu'elle ne requiert, a minima, que la fabrication de la pièce témoin et l'acquisition d'un signal sensible à une variation de température de la pièce témoin. La pièce témoin étant de géométrie simple, l'acquisition d'un tel signal est également simple à mettre en oeuvre. Un tel signal provient, par exemple, d'un capteur ultrasonore (US), d'un capteur infrarouge (IR).

La méthode est, en outre, simple et rapide à mettre en oeuvre puisqu'elle ne nécessite que de déterminer une donnée de refroidissement de la pièce témoin pour détecter ensuite une anomalie thermique du procédé de fabrication par une simple comparaison à la valeur de référence. De plus, la comparaison permet de détecter quasi-instantanément l'anomalie thermique puisqu'elle ne requiert que de connaître la valeur de référence.

Etant donné que le signal est acquis au cours de la fabrication de la pièce témoin, il est possible de mettre en oeuvre la méthode in-situ, durant cette fabrication. La méthode proposée permet donc de rapidement détecter l'anomalie thermique et d'alerter un opérateur ou d'émettre une commande vers la machine de fabrication additive pour corriger le dysfonctionnement de la machine afin, par exemple, d'appliquer une action corrective sur la pièce ou stopper la fabrication de la pièce. En outre, il est possible d'effectuer l'action corrective uniquement pour la ou les couches concernées par l'anomalie thermique. Il est également possible d'anticiper des défauts de fabrication d'une pièce ultérieurement construite, notamment lorsque l'anomalie thermique détectée correspond à une dérive. La détection de l'anomalie thermique permet donc de réduire, voire d'éviter, la perte de matériau de fabrication, en l'occurrence la poudre, par la mise au rebut de pièces défectueuses fabriquées conjointement ou ultérieurement à la pièce témoin.

La plupart des techniques de contrôle non-destructif (US, IR, etc.) permettant une acquisition de signaux de haute résolution à des fréquences d'échantillonnages élevées, il est possible de détecter l'anomalie thermique en quasi-temps réel.

Outre les caractéristiques qui viennent d'être évoquées, la méthode précédente peut présenter une ou plusieurs caractéristiques complémentaires parmi les suivantes, considérées individuellement ou selon toutes les combinaisons techniquement possibles.

Dans un mode de réalisation, la donnée de refroidissement est un temps caractéristique de refroidissement et la valeur de référence est une durée de référence.

On entend par « durée de référence » une durée de refroidissement de la pièce témoin non sujette à une anomalie thermique.

Dans un mode de réalisation, la donnée de refroidissement est une amplitude de variation de la métrique déterminée à partir du signal obtenu et la valeur de référence est une amplitude de référence.

On entend par « amplitude de référence » une variation d'amplitude de la métrique déterminée à partir du signal au cours de la phase de refroidissement dans des conditions nominales.

Dans un mode de réalisation, la donnée de refroidissement est moyennée sur plusieurs dépôts de la pluralité de dépôts successifs, les étapes de la méthode étant mises en oeuvre après la consolidation de chacun des plusieurs dépôts de la pluralité de dépôts successifs.

Le moyennage permet de lisser et/ou d'atténuer la variabilité de la donnée de refroidissement, notamment du fait d'incertitudes de mesure.

Dans un mode de réalisation, les étapes de la méthode sont mises en oeuvre après la consolidation de chaque dépôt de la pluralité de dépôts successifs du lit de poudre.

La méthode permet ainsi de détecter précocement l'anomalie thermique au cours d'une passe en particulier. Il est alors possible d'alerter sur la passe concernée par l'anomalie thermique et donc d'appliquer une action corrective pour cette passe, par exemple appliquant une nouvelle fusion.

Dans un mode de réalisation, la fusion de chaque dépôt de la pluralité de dépôts successifs conduit à fabriquer la pièce témoin, la pièce témoin comprenant un corps tel que le corps est plein et comprend, après la fusion de chaque dépôt de la pluralité de dépôts successifs du lit de poudre, une surface supérieure dont la géométrie est invariante au cours de la fabrication.

La pièce témoin selon l'invention est de forme simple et rapide à fabriquer, telle un cylindre, avec une surface supérieure dont les dimensions sont constantes afin de minimiser la variabilité de l'énergie dissipée par la pièce témoin d'une couche à l'autre, après la fusion de du dépôt.

Dans un mode de réalisation, la pièce témoin comprend en outre une base telle que base est solidaire d'une face supérieure d'un plateau et est de forme évasée depuis le corps jusqu'au plateau, et telle que le corps est solidaire de la base.

Dans ce mode de réalisation particulier, la géométrie de la base de la pièce témoin comporte dans sa partie inférieure une « jupe » qui permet d'assurer une continuité du couplage mécanique de la pièce témoin avec le plateau sans concentration de contraintes tout en assurant la stabilité de la pièce sur le plateau. Dans ce mode de réalisation particulier, la surface de fabrication de la pièce témoin n'est donc constante qu'après le passage de la jupe.

L'utilisation d'une pièce témoin à géométrie simple permet ainsi de relier d'éventuelles variations des propriétés thermiques de la pièce à des fluctuations du procédé de fabrication et donc de fournir une information utile pour un contrôle de la fabrication. L'utilisation d'une pièce témoin à géométrie complexe, telles que celles élaborées habituellement par fabrication additive, serait difficilement exploitable car, dans ce cas, les variations des propriétés thermiques de la pièce sont également fonction des variations de la surface fabriquée pour chaque couche. Il ne serait donc pas possible de déduire directement qu'une anomalie thermique du procédé a lieu à partir d'une mesure sur une telle pièce.

Dans un mode de réalisation, la donnée de refroidissement est une différence entre une valeur à un instant initial, dite valeur initiale, et une valeur à un instant final, dite valeur finale, de la métrique déterminée à partir du signal obtenu, l'instant initial étant compris entre l'instant de fin de consolidation du au moins un dépôt de la pluralité de dépôts successifs et l'instant de début du dépôt suivant, l'instant final étant strictement supérieur à l'instant initial et inférieur ou égal à un instant de début du dépôt suivant.

La donnée de refroidissement est donc directement liée au refroidissement de la pièce témoin entre la fusion de deux dépôts successifs. Il est donc possible d'associer l'anomalie thermique à une couche de la pièce fabriquée.

Dans un mode de réalisation, la donnée de refroidissement est un temps caractéristique de refroidissement et dans laquelle l'instant final est un instant pour lequel la valeur finale est égale à une valeur prédéfinie.

Le temps caractéristique de refroidissement correspond donc au temps nécessaire à la pièce pour que la métrique atteigne la valeur prédéfinie depuis l'instant initial, c'est-à-dire la fin de la fusion de la couche concernée ou un instant espacé de la durée prédéfinie. La valeur prédéfinie est, par exemple, définie par un opérateur en fonction de ses connaissances et/ou de contraintes de fabrication sur la base de fabrications antérieures d'autres pièces, telles que d'autres pièces témoin, et/ou de données issues d'une simulation numérique.

Dans un mode de réalisation, la valeur prédéfinie est égale à la valeur initiale réduite d'un facteur prédéfini.

Le temps de refroidissement est déterminé sans avoir recours à une température initiale imposée qui serait artificiellement prédéfinie et cas-dépendante. Au contraire, le temps caractéristique de refroidissement est déterminé comme étant la durée nécessaire à la température de la pièce témoin pour décroître du facteur prédéfini. La détermination du temps caractéristique de refroidissement est donc relative au signal acquis et non absolue par rapport à une référence imposée. Le facteur prédéfini est défini par un opérateur en fonction de ses connaissances et/ou de contraintes de fabrication sur la base de fabrications antérieures d'autres pièces, telles que d'autres pièces témoin, et/ou de données issues d'une simulation numérique.

Dans un mode de réalisation, la donnée de refroidissement est un temps caractéristique de refroidissement et est déterminée à partir d'un rapport entre une valeur à un instant initial, dite valeur initiale, de la métrique déterminée à partir du signal obtenu et une dérivée temporelle de ladite métrique au voisinage de l'instant initial, l'instant initial étant compris entre l'instant de fin de consolidation du au moins un dépôt de la pluralité de dépôts successifs et l'instant de début du dépôt suivant.

Alternativement, le temps caractéristique de refroidissement est continument calculé à partir des valeurs de la métrique et de sa dérivée. Il n'est donc pas non plus besoin d'utiliser une température initiale imposée, artificiellement prédéfinie et cas-dépendante. Il n'est pas non plus utile de déterminer le temps caractéristique en fonction d'un paramètre fourni par l'opérateur. La détermination du temps caractéristique de refroidissement est donc libre d'a priori sur le procédé de fabrication et/ou la pièce en cours de fabrication.

Dans un mode de réalisation, la donnée de refroidissement est déterminée à partir d'une dérivée temporelle au voisinage d'un instant initial de la métrique déterminée à partir du signal obtenu, l'instant initial étant compris entre l'instant de fin de consolidation du au moins un dépôt de la pluralité de dépôts successifs et l'instant de début du dépôt suivant.

L'utilisation de la dérivée de la métrique permet d'accroitre la sensibilité de la donnée de refroidissement à la dynamique de refroidissement de la pièce.

Dans un mode de réalisation, l'instant initial est l'instant de fin d'apport thermique du au moins un dépôt de la pluralité de dépôts successifs ou un instant suivant l'instant de fin d'apport thermique d'une durée prédéfinie

L'instant initial correspond donc à l'instant où la source cesse d'apporter de l'énergie pour fusionner/solidifier la poudre et où le refroidissement de la pièce est initié. Alternativement, l'instant initial correspond à un instant espacé de la durée prédéfinie de la fin de la fusion pour limiter la sensibilité du calcul à du bruit généré par le caractère transitoire de l'arrêt de la fusion/solidification.

Dans un mode de réalisation, le signal obtenu est un signal d'un rayonnement lumineux de la pièce témoin capté par une photodiode, une pluralité de photodiodes ou une caméra infrarouge.

L'acquisition du signal repose donc sur une technologie de capteur non-intrusif, non-destructif, nécessitant peu d'instrumentation et d'adaptation pour que la mise en oeuvre de la mesure soit compatible avec la machine de fabrication additive et le procédé associé. En outre, le signal acquis par de tels capteurs est notamment sensible à la température de la surface de la pièce témoin qui fait face à la caméra et non à un gradient de température présent sur la hauteur de la pièce. Les informations contenues dans le signal acquis sont donc essentiellement caractéristiques des propriétés de la surface faisant face à la caméra.

Dans un mode de réalisation, le signal obtenu est un signal d'un rayonnement lumineux de la pièce témoin capté par la pluralité de photodiodes ou la caméra infrarouge et comprend une pluralité d'images de la pièce témoin acquises au cours de la fabrication, chaque image de la pluralité d'images comprenant une pluralité de pixels, chaque pixel de la pluralité de pixels étant associé à une valeur d'amplitude lumineuse rayonnée par la pièce témoin, et dans laquelle la métrique est une moyenne pour chaque image de la pluralité d'images des valeurs d'amplitude lumineuse rayonnée de la pluralité de pixels.

L'énergie lumineuse rayonnée par la pièce témoin dépend de la température de surface de la pièce. Le signal capté est donc sensible à une variation de température de surface de la pièce témoin. De plus, appliquer le moyennage sur les valeurs de chaque pixel pour chacune des images permet de réduire l'information à traiter par image à un seul scalaire, limitant le nombre de données à stocker en mémoire, au moins de façon temporaire, tout en réduisant la sensibilité du calcul de la donnée de refroidissement au bruit de mesure.

Dans un mode de réalisation, le signal obtenu est un signal d'une onde ultrasonore se propageant dans la pièce témoin, l'onde ultrasonore étant émise et captée par un capteur ultrasonore positionné en vis-à-vis de la pièce témoin.

L'acquisition du signal repose donc sur une technologie de capteur non-intrusif, non-destructif, nécessitant peu d'instrumentation pour que la mise en oeuvre de la mesure soit compatible avec la machine de fabrication additive et le procédé associé. En outre, le signal acquis par un tel capteur est sensible à la température dans le volume de la pièce témoin. Les informations contenues dans le signal acquis sont plus riches que celles du signal capté par la caméra infrarouge et sont donc caractéristiques à la fois des propriétés volumiques et surfaciques de la pièce.

Dans un mode de réalisation, le signal ultrasonore comprend une variation d'un champ acoustique provoquée par la propagation de l'onde ultrasonore dans la pièce témoin après réflexion sur une surface formée par la fusion du au moins un dépôt, et dans laquelle la métrique est un temps de propagation de l'onde ultrasonore depuis un instant de génération jusqu'à un instant de captation.

Le temps de propagation d'une onde mécanique dans un matériau est dépendant du champ de température présent dans le volume dudit matériau. Le signal capté et le temps de propagation déterminé à partir de ce signal capté sont donc sensibles à une variation de la température dans la pièce témoin.

Dans un mode de réalisation, la méthode selon le premier aspect comprend l'émission d'une alerte relative à l'anomalie thermique détectée.

Un autre aspect de l'invention concerne un dispositif de détection d'une anomalie thermique d'un procédé de fabrication d'une pièce témoin configuré pour mettre en oeuvre la méthode selon le premier aspect.

L'implémentation de cette méthode dans un tel dispositif nécessite peu de ressources pour sa mise en oeuvre, telles qu'un processeur et une mémoire comprenant des instructions qui, lorsqu'exécutées par le processeur, permettent la mise en oeuvre de la méthode décrite plus haut.

Un autre aspect de l'invention concerne un dispositif de détection d'une anomalie thermique pour mettre en oeuvre la méthode le premier aspect, comprenant un capteur ultrasonore destiné à émettre et à capter l'onde ultrasonore, le capteur ultrasonore étant positionné en vis-à-vis de la pièce témoin sous un plateau, ledit plateau étant configuré pour protéger le capteur ultrasonore d'une atmosphère générée par le procédé de fabrication et assurer un continuité mécanique entre le capteur ultrasonore et la pièce témoin.

Le plateau sert donc à assurer l'étanchéité entre l'atmosphère de la chambre de fabrication additive et l'emplacement du capteur tout en garantissant la bonne propagation de l'onde ultrasonore au travers de son épaisseur, depuis le capteur ultrasonore vers la pièce témoin.

Un programme informatique, mettant en oeuvre tout ou partie de la méthode décrite ci-avant, installé sur un équipement préexistant, est en lui-même avantageux.

Ainsi, la présente invention vise également un produit programme informatique comportant des instructions pour la mise en oeuvre de certaines étapes du procédé précédemment décrit, lorsque ce programme est exécuté par un processeur.

Ce programme peut utiliser n'importe quel langage de programmation (par exemple, un langage-objet ou autre), et être sous la forme d'un code source interprétable, d'un code partiellement compilé ou d'un code totalement compilé.

Un autre aspect de l'invention concerne un support d'enregistrement lisible par ordinateur comprenant des instructions qui, lorsqu'elles sont exécutées par un ordinateur, conduisent celui-ci à mettre en oeuvre les étapes de la méthode décrite ci-dessus.

L'invention et ses différentes applications seront mieux comprises à la lecture de la description qui suit et à l'examen des figures qui l'accompagnent.

### BREVE DESCRIPTION DES FIGURES

D'autres caractéristiques et avantages de l'invention apparaîtront à la lecture de la description, qui peut être lue en regard des figures. Ces figures sont présentées à titre indicatif et nullement limitatif de l'invention :
- La figure 1 est un schéma synoptique illustrant l'enchaînement des étapes d'une méthode selon l'invention.
- La figure 2 est une représentation schématique d'une machine de fabrication additive munie d'une caméra infrarouge externe.
- La figure 3 est une représentation schématique d'une variante de la machine de fabrication additive de la figure 2 avec une caméra infrarouge interne.
- La figure 4 est une représentation schématique de la machine de fabrication additive munie capteur ultrasonore.
- La figure 5 est une représentation schématique de la machine de fabrication additive munie de thermocouples.
- La figure 6 est une représentation schématique de la machine de fabrication additive munie de thermocouples selon une variante compatible avec le mode de réalisation de la figure 4.
- La figure 7 est une représentation schématique d'une pièce témoin selon l'invention comprenant un socle, ou jupe, utilisé pour mettre en évidence l'effet d'un changement de paramètres.
- La figure 8 est un exemple de signal provenant d'une captation par une caméra infrarouge.
- La figure 9 est un exemple de signal provenant d'une captation par un traducteur ultrasonore.
- La figure 10 est un exemple de l'évolution d'un temps caractéristique de refroidissement dans la pièce témoin suivant une évolution des paramètres de fabrication au niveau du passage de la jupe selon la figure 7 déterminé par la mise en oeuvre de la méthode selon la figure 1.
- La figure 11 est un exemple de variation d'une amplitude du temps de propagation d'une onde ultrasonore dans la pièce témoin suivant une évolution des paramètres de fabrication selon la figure 7.

### DESCRIPTION DETAILLEE

L'invention concerne une méthode de détection d'une anomalie thermique d'un procédé de fabrication additive par fusion d'un lit de poudre. L'approche proposée est basée sur l'implémentation en machine de fabrication additive de capteurs aptes à mesurer des signaux sensibles à une variation de température tels qu'une caméra infrarouge (IR) ou un traducteur ultrasonore (US) susceptibles de délivrer un signal dont les variations dépendent de la puissance reçue par une pièce au cours de sa fabrication. Ces variations dans les signaux, acquis in situ et en temps réel pendant la fabrication, renseignent sur l'énergie reçue par la pièce et donc sur la stabilité du procédé ainsi que sur la présence d'une anomalie thermique dudit procédé. A ce dessein, la méthode repose sur la fabrication d'une pièce témoin, de géométrie simple, pour laquelle un signal est acquis via l'un des capteurs susmentionnés, puis est analysé pour évaluer la dynamique de refroidissement de cette pièce après la fusion de l'une des couches de lit de poudre déposé. La méthode proposée permet, notamment, de détecter des fluctuations ou des instabilités de la source, qui sert à la fusion, menant à des défauts de fabrications tels que la non-réalisation aléatoire d'une ou de plusieurs fusions, ou encore des dérives à plus long terme de la puissance délivrée par la source.

L'anomalie thermique peut être provoquée par un dysfonctionnement à échelle courte ou longue d'un ou plusieurs éléments de la machine. On entend par « phénomène à échelle de temps courte » et « phénomène à échelle de temps longue » un phénomène se produisant sur une durée courte ou longue, respectivement, relativement à la fabrication complète d'une pièce par la machine de fabrication additive. Il s'agit le plus souvent, pour les phénomènes à échelle de temps courte, de fluctuations ponctuelles ou transitoires dont la durée est inférieure à la durée d'une passe mais est suffisamment longue pour être détectée par une méthode de contrôle, telle que la méthode proposée ici. Complémentairement, les phénomènes à échelle de temps longue sont des fluctuations avec des variations lentes, d'amplitude plus ou moins forte, qui sont détectables après fabrication de plusieurs couches, voire plusieurs utilisations de la machine.

Le procédé en question repose sur la fusion d'un lit de dépoudre, lequel est déposé par une pluralité dépôts successifs. La fusion est effectuée après chaque dépôt du lit de poudre.

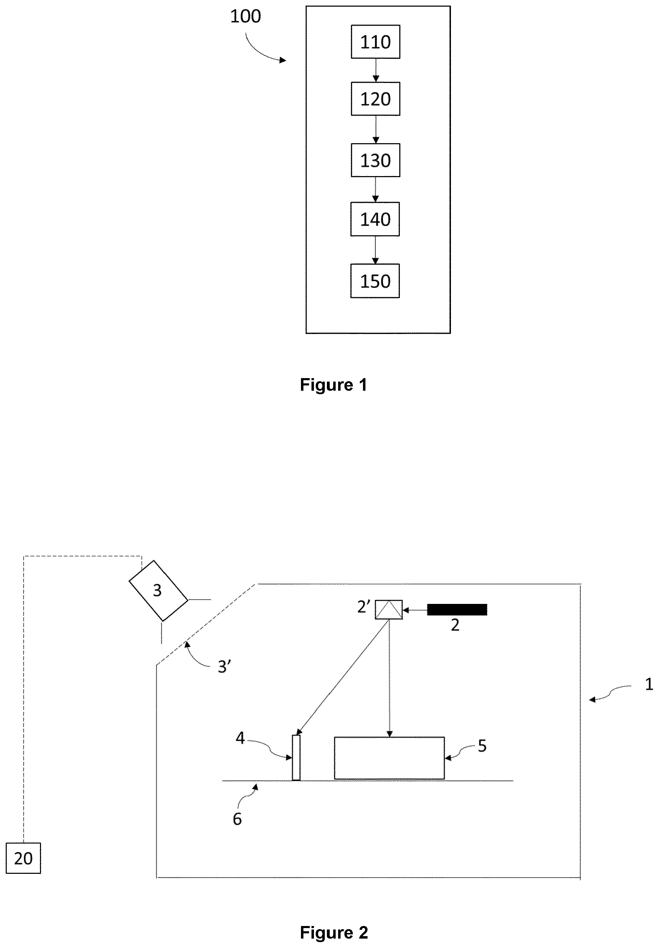

Ainsi qu'illustré sur la figure 1, la méthode 100 de détection d'une anomalie thermique du procédé de fabrication additive comprend plusieurs étapes. La méthode ainsi que les étapes qu'elle comprend peuvent être mis en oeuvre par un dispositif de détection d'une anomalie thermique du procédé de fabrication additive configuré pour mettre en oeuvre la méthode. C'est-à-dire que ce dispositif comprend des moyens matériels et logiciels pour mettre en oeuvre ladite méthode 100. Par exemple, le dispositif en question est un ordinateur comprenant un processeur et une mémoire, volatile ou non-volatile, laquelle comprend des instructions qui, lorsqu'exécutées par le processeur, conduisent à la mise en oeuvre de la méthode 100.

Puisque l'objectif de la méthode est de déterminer une anomalie thermique du procédé à partir d'une donnée de refroidissement de la pièce après la fusion d'un des dépôts de lit de poudre, ces étapes sont successivement mises en oeuvre une fois que la fusion du dépôt en question a eu lieu.

Dans un mode de réalisation, ces étapes sont mises en oeuvre pour chaque dépôt de lit de poudre effectué, après fusion dudit lit de poudre. Alternativement, ces étapes sont mises en oeuvre après la fusion de certains dépôts de lit de poudre, par exemple après la fusion de chaque dépôt d'un nombre N de dépôts de lit de poudre, où N est un nombre entier supérieur à 1.

Par mesure d'illustration, la méthode est, dans la suite, mise en oeuvre pour l'analyse d'un signal acquis via une caméra infrarouge (IR) et un mode d'apport de la chaleur par laser. Un tel mode de réalisation est illustré sur la figure 2. Toutefois, cette illustration est sans se départir de la généralité de l'applicabilité de la méthode à d'autres technologies d'apport de chaleur et de capteurs aptes à produire un signal sensible à une variation de température de la pièce témoin.

La machine 1 de fabrication additive comprend une source 2 thermique, par exemple un laser, une source de faisceau d'électrons ou un ensemble de lampes infrarouges. La source émet de l'énergie vers la pièce témoin 4 et, optionnellement, vers une autre pièce à fabriquer 5. La machine 1 comprend également un plateau 6 apte à servir de support pour la fabrication de la pièce témoin 4 et de l'autre pièce 5.

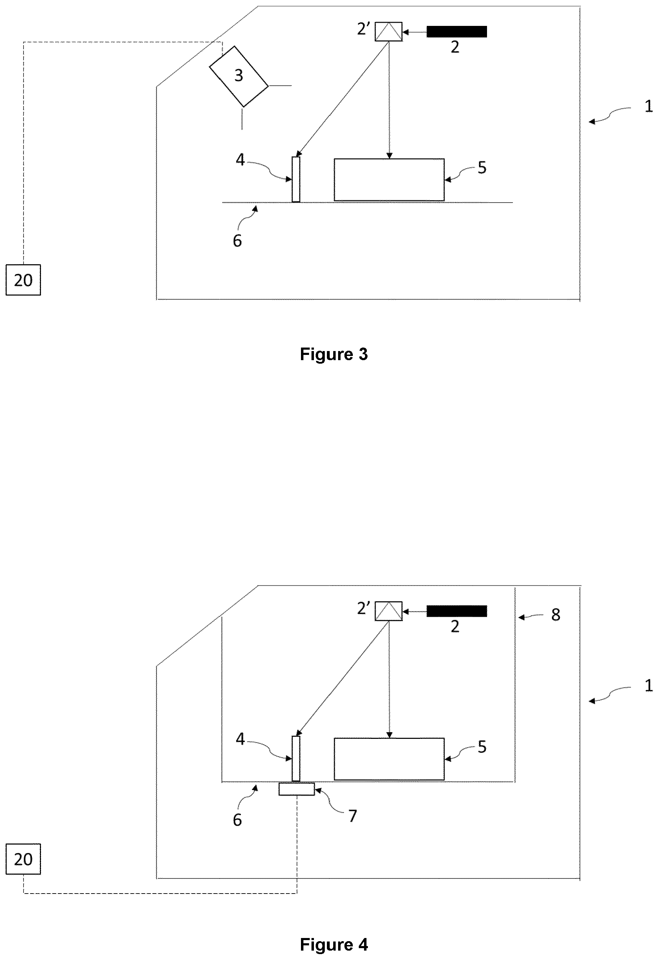

La caméra IR 3 est disposé en dehors de la machine de sorte que son objectif soit face à un hublot 3' de la machine 1 non-opaque aux rayonnements IR, par exemple en germanium ou saphir. Dans un mode de réalisation alternatif, illustré sur la figure 3, la caméra IR 3 est dans la machine 1. La caméra IR 3 est, dans ce cas, disposée de sorte à ne pas altérer ou entraver le fonctionnement de la machine 1. Le hublot 3' non-opaque aux rayonnements IR n'est pas requis ici.

La caméra IR 3 est orientée de sorte que son objectif soit dirigé en direction de la pièce témoin 4 et de sorte qu'aucun autre élément de la machine 1 ne fasse écran entre la caméra IR 3 et la pièce témoin 4. La caméra IR 3 peut, par exemple, opérer soit dans la gamme mid-wave, avec des longueurs d'onde comprises entre 2 et 6 µm, soit dans l'infrarouge lointain avec des longueurs d'onde comprises entre 8 et 14 µm. Alternativement, la caméra peut être substituée par une ou plusieurs photodiodes, dites photodiodes de mesure.

La pièce témoin 4 est fabriquée, au moyen de la fusion des dépôts successifs, de sorte à être pleine, c'est-à-dire sans cavité ou évidement, et à avoir une géométrie simple.

La géométrie, et les dimensions afférentes, de la surface supérieure construite passe après passe, de la pièce témoin 4, sont préférentiellement constantes tout au long de la fabrication.

La pièce témoin est, par exemple, de forme cylindrique ou parallélépipédique, tel un pavé. La largeur, ou le diamètre, de la pièce témoin est comprise entre 0,5 et 5 cm, préférentiellement entre 0,5 et 2 cm. La pièce est donc de largeur suffisamment fine pour ne pas utiliser trop de matière pour sa fabrication mais est suffisamment grande pour qu'une fluctuation thermique soit détectable par le capteur.

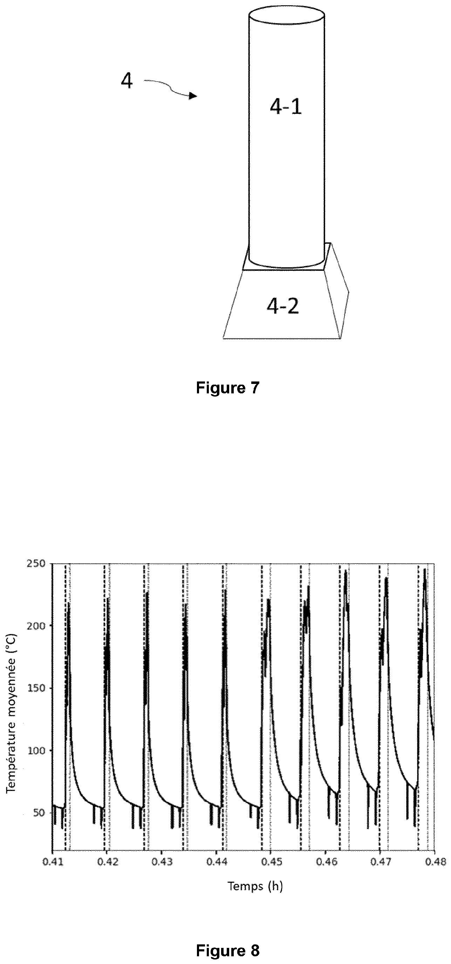

Dans un mode de réalisation particulier illustré sur la figure 7, la pièce témoin 4 comprend un corps 4-1 et une base 4-2 solidaires l'un de l'autre. Le corps 4-1 de la pièce témoin est de la forme cylindrique ou parallélépipédique précédemment décrite. Le corps 4-1 est donc de géométrie invariante tout au long de la fabrication. La base 4-2 est de forme évasée depuis le corps jusqu'au plateau 6. La base 4-2 a donc une largeur qui augmente progressivement depuis le corps jusqu'au plateau 6.

La base 4-2 peut être un polyèdre ou être de forme annulaire concave ou convexe. La base est solidaire du plateau.

La surface supérieure de la pièce témoin 4 est également parallèle à la face supérieure du plateau 6.

La pièce témoin 4 peut être fabriquée n'importe où sur le plateau 6 ou à un endroit précis sur le plateau pour contrôler le procédé de fabrication à cet endroit précis. La pièce témoin 4 est positionnée sur le plateau de sorte à ne pas gêner la fabrication d'une autre pièce, par exemple en sélectionnant l'emplacement de la pièce témoin 4 sur le plateau après avoir sélectionné le ou les emplacements pour la fabrication des autres pièces.

La caméra 3 sert à capter un rayonnement lumineux émis par la pièce témoin 4. Ce rayonnement est produit par la dissipation thermique de la pièce témoin 4 liée à l'apport d'énergie provenant de la source 2.

La caméra est reliée à un appareil 20 servant à l'acquisition de signaux via la caméra IR 3. L'appareil d'acquisition peut être le dispositif configuré pour mettre en oeuvre la méthode 100.

La méthode 100 comprend donc une étape 110 d'obtention d'un signal acquis au moyen de la caméra IR 3. Par acquisition d'un signal est entendu l'acquisition d'échantillons numériques d'une quantité physique à laquelle le capteur est sensible. L'acquisition est faite par l'appareil 20 à une fréquence d'échantillonnage prédéfinie. La fréquence d'échantillonnage prédéfinie est définie par un opérateur et est suffisamment élevée afin de disposer d'un nombre suffisant d'échantillons pour analyser la dynamique de refroidissement. Dans la pratique ce nombre d'échantillons est supérieur à 10, préférentiellement supérieur à 100, encore plus préférentiellement supérieur à 1000. Par « obtention » est donc entendu que le signal est transmis sous format numérique au dispositif mettant en oeuvre la méthode 100 par un support de transmission, par exemple une connexion filaire ou non-filaire.

Dans ce mode de réalisation, le signal acquis comprend une pluralité d'images IR acquises à la fréquence d'échantillonnage prédéfinie. Chaque image est formée d'une pluralité de pixels. Chaque pixel de l'image est associé à une amplitude lumineuse du rayonnement lumineux égale à un nombre de photons captés pour ledit pixel.

L'acquisition du signal est faite en continue durant la fabrication de la pièce témoin 4.

Alternativement, l'acquisition est déclenchée au moyen d'une photodiode, dites photodiode de détection, qui sert à détecter l'instant de fin de fusion du dépôt. L'instant de fin de fusion est l'instant auquel la source cesse d'émettre l'énergie nécessaire à la fusion du lit de poudre. Autrement dit, il s'agit de l'instant de fin d'apport thermique.

L'acquisition peut également être stoppée à l'instant de début du dépôt suivant ou à l'instant de début de fusion de ce dépôt suivant, également détecté au moyen de la photodiode de détection. L'instant de début du dépôt est le moment où le dépôt suivant commence à être déposé. L'instant de début de fusion est le moment où la source commence à émettre l'énergie nécessaire à la fusion du lit de poudre.

La méthode 100 comprend, ensuite, une étape 120 de détermination d'une donnée de refroidissement, en particulier de la surface de la pièce témoin 4 qui vient d'être fabriquée. Cette donnée de refroidissement est caractéristique de la dynamique de refroidissement de la pièce. La donnée de refroidissement permet de quantifier le refroidissement de la surface qui vient d'être consolidée. La donnée de refroidissement est donc une caractéristique quantifiable de la cinématique du refroidissement de cette surface du fait de l'arrêt de l'émission d'énergie par la source 2. A ce titre, la donnée de refroidissement peut-être une amplitude de variation d'une métrique du signal ou un temps caractéristique de refroidissement.

Dans le mode de réalisation présenté, la donnée de refroidissement est déterminée à partir du signal lumineux acquis par la caméra IR 3, formant une image dite image IR. Préférentiellement, la donnée de refroidissement est déterminée par l'analyse d'une métrique calculée à partir du signal obtenu. Dans le cas où le signal est acquis via la caméra IR 3, la métrique en question est une amplitude moyenne calculée en moyennant, pour chaque image IR, les valeurs d'amplitude lumineuse de tous les pixels de l'image. Dans certains modes de réalisation, la moyenne est appliquée sur une partie de la pluralité de pixels. La pluralité d'images est donc moyennée en une pluralité de scalaires, dont la valeur de chacun d'eux est égale à la moyenne des amplitudes de l'image afférente. La donnée de refroidissement est donc déterminée en fonction de la variation de l'amplitude moyenne calculée pour chaque image.

Dans un mode de réalisation alternatif, la donnée de refroidissement est déterminée à partir du signal lumineux acquis par la photodiode de mesure. Dans ce cas, la métrique en question est l'amplitude lumineuse captée par la photodiode de mesure.

Dans un mode de réalisation, la donnée de refroidissement est déterminée à partir des signaux lumineux acquis par la pluralité de photodiodes de mesure. La concaténation des signaux lumineux forme une image, chaque pixel de l'image étant associé à l'une des photodiodes de la pluralité de photodiodes de mesure. Chaque pixel de l'image est donc associé à l'amplitude lumineuse capté par la photodiode associée. Tout comme pour la caméra thermique 3, un moyennage de l'amplitude lumineuse est effectué sur tout ou une partie de l'ensemble des pixels. La métrique est alors, à chaque instant, la moyenne des amplitudes lumineuses captées par chacune des photodiodes de mesure.

La donnée de refroidissement est déterminée à partir d'une différence entre une valeur de la métrique prise à un instant initial et une valeur de la métrique prise à un instant final. Cette donnée peut être, si nécessaire, adimensionnée et/ou normalisée.

L'instant initial est, par exemple, l'instant de fin de fusion du dépôt pour lequel la méthode 100 est mise en oeuvre.

Alternativement, l'instant initial est un instant successif et proche de l'instant de fin de fusion. Dans ce cas, l'instant initial est, par exemple, décalé de l'instant de fin de fusion d'une durée égale à la durée prédéfinie, par exemple comprise entre 0,1 s et 2 s. La durée prédéfinie est, par exemple, choisie par l'opérateur en fonction de ses connaissances et de contraintes de fabrication. De préférence, la durée prédéfinie est définie de sorte à minimiser la sensibilité du signal obtenu au bruit de mesure engendré par des phénomènes transitoires dus à l'arrêt quasi-instantané de l'énergie apportée par la source.

L'instant final est un instant ultérieur à l'instant initial, strictement supérieur à l'instant initial. L'instant final est inférieur ou égal à l'instant de début du dépôt suivant. La notion de quasi-temps réel est ainsi relative au temps de fabrication d'une couche puisqu'il faut attendre d'atteindre l'instant final pour déterminer la donnée de refroidissement, qui peut être l'instant de fin de consolidation de la couche.

Dans le cas où la donnée de refroidissement est l'amplitude de variation de la métrique, la donnée de refroidissement est égale à une différence entre la valeur de la métrique à l'instant initial et la valeur de la métrique à l'instant final.

Dans un mode préférentiel de réalisation de l'invention, la cinématique de refroidissement est mesurée par la détermination du temps caractéristique de refroidissement, déterminé à partir du signal obtenu à l'étape précédente. Le temps caractéristique de refroidissement correspond à une durée de refroidissement de la pièce, en particulier de la surface de la pièce témoin 4 qui vient d'être fabriquée. Le temps caractéristique de refroidissement correspond donc à une durée durant laquelle la couche dont le dépôt vient d'être fusionné subit une décroissance en température.

Le temps caractéristique de refroidissement est égal à la différence entre l'instant initial et l'instant final.

Dans une alternative, l'instant final est un instant auquel la valeur de la métrique, dite valeur finale, est égale à une valeur prédéfinie. Le temps caractéristique de refroidissement est alors le temps nécessaire à la surface de la pièce témoin pour refroidir jusqu'à la valeur prédéfinie.

La valeur prédéfinie est, par exemple, une valeur d'amplitude moyenne de d'amplitude lumineuse définie par l'opérateur. La valeur d'amplitude peut être une valeur absolue ou une valeur relative à une autre valeur.

Préférentiellement, la valeur prédéfinie est définie relativement à la valeur de la métrique à l'instant initial, dite valeur initiale, en l'occurrence ici la valeur moyenne de l'amplitude lumineuse captée par la caméra IR 3. Par exemple, la valeur prédéfinie est inférieure d'un facteur prédéfini à la valeur initiale. A titre d'exemple, le facteur prédéfini est strictement supérieur à 0 et strictement inférieur à 1 ; il est par exemple compris entre 0,1 et 0,9. La valeur prédéfinie est donc proportionnelle à la valeur initiale et l'instant final est l'instant après l'initial auquel la valeur finale est égale la valeur initiale réduite du facteur prédéfini. Le facteur prédéfini est, par exemple, défini par l'opérateur. Le temps caractéristique de refroidissement est alors le temps nécessaire à la surface de la pièce témoin pour refroidir du facteur prédéfini.

La méthode 100 comprend, ensuite, une étape 130 de comparaison de la donnée de refroidissement déterminée à l'étape précédente avec une valeur de référence.

La valeur de référence est définie par l'opérateur ou au moyen d'un outil numérique de simulation et correspond à une valeur nominale de la donnée de refroidissement, c'est-à-dire une valeur de donnée de refroidissement pour laquelle aucune anomalie thermique n'a eu lieu.

La comparaison est mise en oeuvre par calcul d'une distance, par exemple sous forme d'une différence, entre la valeur de référence et la donnée de refroidissement déterminée.

Plus cette distance est petite, donc plus la donnée de refroidissement est proche de la valeur de référence et moins il y a de risque qu'une anomalie thermique ait lieu. L'énergie dissipée par la pièce témoin lors de son refroidissement correspond donc bien à l'énergie qu'elle est censée dissiper lorsque le procédé de fabrication est mis en oeuvre sans anomalie thermique.

Au contraire, plus cette distance est grande et plus le risque qu'une anomalie thermique ait lieu est élevé. L'énergie dissipée par la pièce témoin lors de son refroidissement est donc anormalement élevée ou anormalement bas.

Dans un mode de réalisation, la valeur de référence est égale à la donnée de refroidissement déterminée pour une couche précédente ou à une moyenne de données de refroidissement déterminées pour plusieurs couches précédentes, la méthode 100 ayant été mise en oeuvre pour cette ou ces précédentes couches. La ou les couches précédentes servant à la définition de la valeur de référence sont, préférentiellement, des couches construites sans modification du procédé de fabrication par rapport à la couche en cours de contrôle.

Ainsi, lorsque la donnée de refroidissement est l'amplitude de variation de la métrique, la valeur de référence est une amplitude de variation de référence de la métrique, obtenue dans des conditions nominales de fabrication ; et lorsque la donnée de refroidissement est le temps caractéristique de refroidissement, la valeur de référence est une durée de référence, également obtenue dans des conditions nominale de fabrication.

La méthode 100 comprend, ensuite, une étape 140 de détection de l'anomalie thermique à partir de la comparaison de l'étape précédente. L'anomalie thermique est détectée lorsque la comparaison entre la donnée de refroidissement et la valeur de référence, c'est-à-dire entre l'amplitude de variation de la métrique et l'amplitude de variation de référence de la métrique ou entre le temps caractéristique de refroidissement et la durée de référence, indique une écart trop grand entre ces valeurs. En particulier, l'anomalie thermique est détectée lorsque la distance calculée à l'étape précédente est supérieure à un seuil prédéfini.

Le seuil est par exemple défini en fonction d'un écart-type de la donnée de refroidissement calculé pour une pluralité de passes d'une pluralité de pièces de référence, par exemple d'autres pièces témoin ou d'autres exemplaires de la pièce témoin 4, pour lesquelles aucune anomalie thermique n'a été détectée.

Alternativement, le seuil peut être défini en fonction de la donnée de refroidissement et/ou de la moyenne de données de refroidissement calculées pour la ou les couches précédentes. Par exemple, le seuil est proportionnel à la donnée de refroidissement déterminée pour la couche précédente ou à la moyenne des données de refroidissement des couches ou de certaines couches précédentes. Par exemple, le seuil est égal à l'écart-type de cette moyenne.

Le seuil prédéfini peut, par ailleurs, être défini par l'opérateur.

La méthode 100 comprend, ensuite, une étape 150 d'émission d'une alerte. L'alerte est relative à l'anomalie thermique détectée. Par exemple, l'alerte peut comprendre une ou plusieurs informations portant sur la couche pour laquelle l'anomalie thermique est détectée. L'alerte est, par exemple, un message émis vers l'opérateur sous la forme de caractères alphanumériques. L'alerte peut également comprendre une partie ou l'intégralité du signal obtenu et relatif à ladite alerte, c'est-à-dire tout ou une partie des échantillons dudit signal. L'alerte peut, de plus, comprendre une partie ou l'intégralité de la métrique calculée à partir du signal obtenu, c'est-à-dire tout ou une partie des valeurs que la métrique comprend.

Lorsqu'une ou plusieurs autres pièces 5 sont conjointement fabriquées à la pièce témoin 4, cette alerte est utilisée pour mettre en oeuvre une action corrective, par exemple sous forme d'une rétroaction. Il est ainsi possible de corriger l'anomalie thermique du procédé de fabrication et, éventuellement, corriger un défaut de fabrication engendré sur les autres pièces 5 par l'occurrence de l'anomalie thermique.

Dans un mode de réalisation, le capteur servant à capter le signal est un capteur ultrasonore (US). Ce capteur est préférentiellement un traducteur mono-élément, convertissant une déformation mécanique en une tension électrique par effet piézoélectrique. Alternativement, le capteur est un traducteur multi-éléments.

Préférentiellement, le capteur US est un traducteur mono-élément permettant ainsi l'acquisition du signal à une fréquence d'échantillonnage élevée et la propagation d'une onde US à une vitesse élevée, permettant une évaluation en quasi-temps réel de la donnée de refroidissement. Dans un mode de réalisation alternatif, la génération/détection de l'onde ultrasonore est réalisée au moyen d'un laser.

Ainsi qu'illustré sur la figure 4, le traducteur 7 est positionné sous le plateau 6 qui supporte la pièce témoin 4 et l'optionnelle autre ou pluralité d'autres pièces 5. Ce capteur est disposé en vis-à-vis de la pièce témoin afin de maximiser la transmission d'ondes US entre le capteur et la pièce témoin. Le traducteur 7 peut être placé au contact de la face inférieure du plateau 6 et un couplant peut également être appliqué entre le capteur et le plateau 6.

En plus de son rôle de support des pièces fabriquées et du traducteur 7, pour lequel il est compatible chimiquement et thermo-mécaniquement avec le matériau utilisé pour la fabrication, le plateau sert à protéger le capteur US 7 de l'atmosphère générée par le procédé de fabrication. A cet effet, le plateau 6 est apte à protéger, voire à isoler, le capteur US 7 de la chambre 8 de fabrication additive dans laquelle la fabrication additive de la pièce témoin 4, et d'autres éventuelles pièces 5, a lieu. Il assure donc l'étanchéité entre la chambre 8 de fabrication additive et l'emplacement où se trouve le capteur US 7. Le plateau est constitué d'un matériau compatible avec les pièces à élaborer, le choix relevant des compétences de l'opérateur.

On entend par « chambre de fabrication additive » la partie de la machine 1 de fabrication additive dans laquelle la fabrication additive a lieu. La chambre 8 est isolée des autres parties de la machine 1 de fabrication additive afin de protéger l'intérieur de la machine du contact avec la matière sous forme de poudres. La chambre 8 contient, par exemple, la source 2 utilisée pour la fusion, la pièce témoin 4, la ou les autres pièces à fabriquer 5, un réservoir de poudre (non représenté) et un dispositif de dépôt du lit de poudre (non représenté).

Le plateau 6 est également apte à assurer la continuité mécanique entre le capteur US 7 et la pièce témoin 4 afin de réduire la rupture d'impédance acoustique pour une onde US se propageant entre le capteur US 7 et la pièce témoin 4. Le plateau est également configuré pour être peu atténuant pour les ondes mécaniques. Avantageusement il peut être usiné pour permettre l'intégration du traducteur et d'éventuels thermocouples sans modifier l'architecture de la machine.

Dans un mode de réalisation, ce plateau 6 dispose d'une ouverture permettant le passage des supports de liaison, par exemple des câbles reliant le capteur US 7 à l'appareil 20 d'acquisition ou au dispositif de détection de l'anomalie thermique.

Le capteur US 7 est configuré pour générer une onde US autour d'une fréquence centrale comprise entre 1 MHz et 100 MHz, préférentiellement entre 2 MHz et 20 MHz, avec une bande passante comprise entre 50 % et 95 % à -6 dB, par exemple de 80 % à -6 dB.

L'onde US générée se propage alors depuis le capteur US 7 dans la pièce témoin 4 en traversant l'épaisseur du plateau 6. L'onde est ensuite réfléchie par la surface supérieure de la pièce témoin 4 et est rétro-propagée depuis cette surface jusqu'au capteur US 7.

Le capteur US 7 détecte donc la perturbation du champ de déplacement, à sa surface en contact avec le plateau 6, générée par la propagation de l'onde US, notamment après sa réflexion par la surface supérieure de la pièce témoin 4. Chaque échantillon de la pluralité d'échantillons du signal acquis comprend une valeur d'amplitude de la variation dudit champs de déplacement.

L'onde US est émise sous la forme d'une succession continue d'impulsions, en anglais « pulses », séparés d'un pas de temps prédéfini, ledit pas de temps étant compris entre 0,01 s et 1 s, préférentiellement 0,02 s et 0.2 s. Les pulses peuvent, également, être uniquement émis entre l'instant de fin de fusion et l'instant de début de dépôt suivant.

La vitesse de propagation de l'onde US étant sensible à une variation de température de la pièce témoin 4, cette vitesse décroît significativement lors du refroidissement de la pièce témoin 4 entre les fusions respectives de deux couches successives. Cette décroissance permet de déterminer la donnée de refroidissement de la pièce témoin 4.

Conséquemment, on cherche à extraire l'évolution du temps de propagation de l'onde US du signal US capté par le capteur US 7, comprenant les variations de l'amplitude du champ de déplacement à sa surface. Pour chaque train d'onde émis, le temps de propagation est déterminé comme étant la différence l'instant de captation de l'écho de l'onde US par le capteur US 7 et l'instant de génération de l'onde par le capteur US 7.

La métrique utilisée pour déterminer la donnée de refroidissement est donc le temps de propagation aller-retour de l'onde depuis sa génération jusqu'à sa captation par le capteur US 7.

Dans ce mode de réalisation, lorsque la donnée de refroidissement est une amplitude de variation de la métrique, la donnée de refroidissement est un temps de propagation et est égale à la différence entre le temps de propagation de l'onde US à l'instant initial et le temps de propagation de l'onde US à l'instant final.

Dans ce mode de réalisation, lorsque la donnée de refroidissement est le temps caractéristique de refroidissement, celui-ci est déterminé comme étant la différence entre l'instant initial et l'instant final, où l'instant final est l'instant ou la valeur du temps de propagation atteint la valeur prédéfinie, laquelle est alors une valeur de temps de propagation. A nouveau, la valeur prédéfinie peut être définie de façon absolue ou relativement à une autre valeur, tel que relativement à la valeur initiale, par exemple pour être inférieure du facteur prédéfini à la valeur initiale. La valeur initiale est définie de la même façon que dans le cas de l'utilisation de la caméra IR 3. La valeur initiale est donc le temps de propagation de l'onde US à l'instant initial.

Au cours de sa fabrication, la pièce témoin 4 est préférentiellement fabriquée de sorte que sa surface supérieure soit plane et dans un plan orthogonal à la direction de propagation de l'onde US, afin de maximiser l'énergie de l'écho spéculaire capté par le capteur US 7.

Dans un mode de réalisation, la donnée de refroidissement est égale à une valeur d'une dérivée de la métrique déterminée (l'amplitude moyenne par image ou le temps de propagation de l'onde US). La dérivée est, par exemple une dérivée temporelle d'ordre 1 de la métrique dont la valeur est évaluée au voisinage de l'instant initial, par exemple à l'instant initial. La dérivée est, par exemple, calculée au moyen d'une différence finie. La différence finie peut être centrée ou non-centrée. Ainsi, lorsque la métrique est issue de la caméra IR 3, la donnée de refroidissement est une dérivée de l'amplitude moyenne par image ; et, lorsque la métrique est issue du capteur US 7, la donnée de refroidissement est une dérivée du temps de propagation de l'onde US. La valeur de référence est alors la valeur de la dérivée de la métrique au voisinage de l'instant initial, par exemple à l'instant initial, lorsque la métrique est obtenue dans des conditions nominales de fabrication. Il n'est donc plus besoin de déterminer l'instant final ni la valeur final à comparer à la valeur prédéfinie pour évaluer la donnée de refroidissement.

Dans une alternative, la donnée de refroidissement est une différence entre la dérivée de la métrique au voisinage de l'instant initial, par exemple à l'instant initial, et la dérivée de la métrique au voisinage de l'instant final, par exemple à l'instant final.

Dans un autre mode de réalisation, le temps caractéristique de refroidissement est alternativement déterminé comme étant proportionnel à une division de la métrique déterminée (l'amplitude moyenne par image ou le temps de propagation de l'onde US) par une valeur de la dérivée de cette métrique par rapport au temps.

Cette division est, par exemple, évaluée au voisinage de l'instant initial. C'est-à-dire qu'on divise la valeur de la métrique prise au voisinage de l'instant initial par sa dérivée calculée au voisinage de l'instant initial. En particulier, cette division est évaluée à l'instant initial. Le temps caractéristique de refroidissement est donc la valeur du rapport entre la métrique et sa dérivée calculée à l'instant initial.

La dérivée est, par exemple déterminée de la même façon que dans le mode de réalisation précédent.

Dans cette alternative, le temps caractéristique de refroidissement est directement calculé autour de l'instant initial sans avoir recours à l'instant final ni à la valeur final.

Dans une autre alternative, le temps caractéristique de refroidissement est déterminé comme étant proportionnel à une division d'une variation de ladite métrique par la valeur de la dérivée de cette métrique par rapport au temps au voisinage de l'instant initial, par exemple à l'instant initial. La variation de ladite métrique est déterminée comme étant égale à une différence entre la valeur de la métrique à l'instant initial et la valeur de la métrique à l'instant final.

Dans cette alternative, il n'est donc pas nécessaire de déterminer l'instant final relativement à l'instant initial pour évaluer le temps nécessaire pour atteindre la valeur prédéfinie. L'instant final peut donc être n'importe quel instant ultérieur à l'instant initial. Préférentiellement, l'instant final est l'instant de début du dépôt suivant ou un instant précédant l'instant de début du dépôt d'une courte durée prédéfinie, par exemple comprise entre 0,01 s et 1 s.

La valeur de référence est alors la valeur de la division de la métrique, ou de la variation de la métrique, par la dérivée de la métrique au voisinage de l'instant initial, par exemple à l'instant initial, lorsque la métrique est obtenue dans des conditions nominales de fabrication.

Dans un mode de réalisation, une fois la donnée de refroidissement déterminée sur une couche, on peut avantageusement effectuer un moyennage des valeurs obtenues sur plusieurs couches. La durée de la fenêtre de moyennage est suffisamment longue pour permettre de lisser le signal et réduire sa sensibilité aux incertitudes de mesure ainsi qu'au bruit. La durée de ladite fenêtre est également suffisamment courte pour limiter la perte d'informations.

Dans le cas du capteur US 7, le moyennage est appliqué aux données sur un nombre de couches compris entre 3 et 10, préférentiellement entre 5 et 8. Dans le cas de la caméra IR 3, le moyennage est appliqué aux données sur un nombre de couches compris entre 2 et 8, préférentiellement entre 4 et 6.

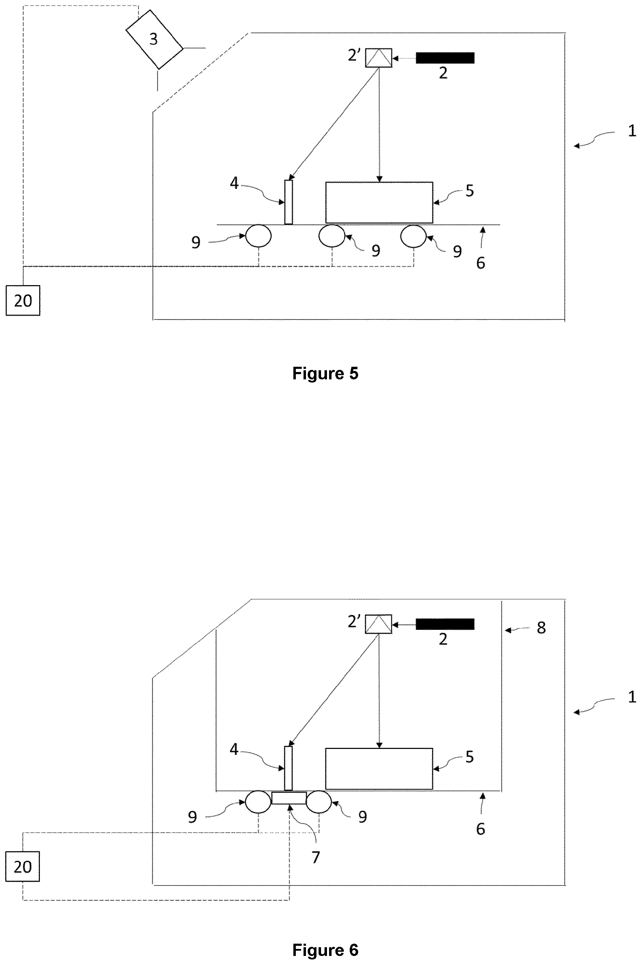

Dans un mode de réalisation, un ou plusieurs thermocouples sont instrumentés dans la machine 1, par exemple des thermocouples de type K. Ainsi qu'illustré sur la figure 5, les thermocouples 9 sont disposés de sorte à être positionnés sous le plateau 6, par exemple au contact de la surface inférieure du plateau 6. Les thermocouples sont reliés à l'appareil d'acquisition 20 et/ou au dispositif de détection de l'anomalie thermique.

Les thermocouples 9 peuvent être placés à n'importe quels endroit sous le plateau 6 ou à des endroits précis afin de collecter des données sur la température à ces endroits précis. Par exemple, ainsi qu'illustré sur la 6, les thermocouples peuvent être disposés de part et d'autre du capteur US 7, afin de collecter précisément la température au niveau dudit capteur US7.

Un intérêt d'utiliser des thermocouples 9 est de pouvoir construire une base de données pouvant ultérieurement servir à renseigner un modèle thermique dans une simulation numérique. Un autre intérêt est de pouvoir contrôler les variations de température au niveau du plateau 6 durant la fabrication.

Dans un mode de réalisation, plusieurs exemplaires de la pièce témoin 4 sont simultanément fabriqués. D'autres pièces témoin 4 de dimensions ou de formes différentes peuvent également être fabriquées. La méthode 100 est alors mise en oeuvre pour une partie ou l'intégralité des pièces ou des exemplaires pour un, plusieurs ou chaque dépôt du lit de poudre. Un intérêt est d'être en mesure détecter sur un plus long terme l'anomalie thermique, notamment s'agissant d'une dérive. Un autre intérêt est de pouvoir évaluer la robustesse du procédé, vis-à-vis d'une anomalie thermique, à plusieurs positions sur le plateau 6 ; en effet, les performances du procédé de fabrication peuvent dépendre de la position de la pièce par rapport à la source ou à d'autres éléments de la machine.

Par ailleurs, plusieurs autres pièces 5 optionnelles peuvent être construites conjointement à la pièce témoin 4 ou à la pluralité d'exemplaires de la pièce témoin 4 ou la pluralité de pièces témoin 4 différentes. Les exemplaires ou les différentes pièces témoin 4 servent alors à détecter l'anomalie thermique tout au long de la fabrication de la pluralité d'autres pièces 5, par exemple en alternant la fabrication d'une des pièces témoin 4 avec la fabrication d'une ou plusieurs des autres pièces 5. Cela permet d'identifier précisément les autres pièces 5 pour lesquelles l'anomalie thermique peut avoir dégradé la fabrication et mieux cibler l'action corrective à appliquer, par exemple en ne corrigeant que les pièces concernées par l'anomalie thermique. A cette fin, l'alerte peut comprendre une information portant sur la pièce témoin 4 et, éventuellement, sur la ou les autres pièces 5 concernées par l'anomalie thermique.

Avantageusement, il est possible d'utiliser la méthode proposée pour évaluer une évolution de la dynamique de refroidissement au cours de la fabrication de la pièce, ou sur plusieurs fabrications successives de pièces différentes. La dynamique de refroidissement de la pièce peut donc être comparée à une ou plusieurs tendances de refroidissement de référence. Ces tendances de références sont par exemple obtenues par une campagne de mesure précédente ou par un outil numérique de simulation et représentent la dynamique de refroidissement pour une ou plusieurs passes avec et/ou sans anomalie thermique. La comparaison de la dynamique de refroidissement avec la ou les tendances de référence permet d'identifier un comportement anormal dans le refroidissement de la pièce, sans qu'une anomalie thermique de soit nécessairement détectée ou en cours. Au contraire, et avantageusement, cette comparaison permet de prédire une future anomalie thermique, par exemple pour une passe ultérieure à la passe en cours ou pour une fabrication ultérieure à celle en cours. Un intérêt est donc d'identifier un comportement qui à court ou long terme mène à l'occurrence de l'anomalie thermique. Lorsqu'un tel comportement est identifié, il est alors possible d'anticiper l'anomalie thermique et de la prévenir, par exemple en appliquant une action corrective.

L'applicabilité de la méthode 100 a été évaluée sur deux machines 1 de fabrication additives différentes. Deux matériaux de poudre ont été utilisés : AlSi7Mg et IN 625. La méthode a été conjointement mise en oeuvre en utilisant une caméra IR et un capteur US. En l'occurrence, il s'agit d'une caméra thermique Optris^{™} PI 640i G7, placée au-dessus de la machine 1, à travers un hublot de germanium. Le capteur US était un traducteur ultrasonore mono-élément dont la fréquence d'émission centrale est de 5 MHz, fixé sous le plateau 6 de fabrication. Le signal US a été acquis avec une fréquence d'échantillonnage de 156 MHz. Une photodiode a été instrumentée pour détecter les instants de début et de fin de fusion.

Deux thermocouples 9 de type K étaient disposés sous le plateau, de part et d'autre du transducteur.

La pièce témoin 4, de forme cylindrique, a été fabriquée de sorte à avoir un diamètre de 20 mm de diamètre et une hauteur après fabrication de 15 mm. La base a été formée sur les premières 65 couches, en partie basse du cylindre.

Pour la base, la puissance délivré par la source, ici un laser, était de 240 W. La vitesse de scan de la source étant 2000 mm/s.

Pour le corps, la puissance délivrée était de 253 W et la vitesse de scan de 900 mm/s.

Le temps d'émission de l'énergie de fusion par la source diminue donc pour sur les 65 premières couches correspondant à la base, du fait de la forme évasée. Le temps d'émission de l'énergie est ensuite constant et à une valeur plus élevée, puisque la vitesse de scan est plus lente pour le corps que pour la base et que la surface à fabriquée est de même dimension d'une passe à l'autre.

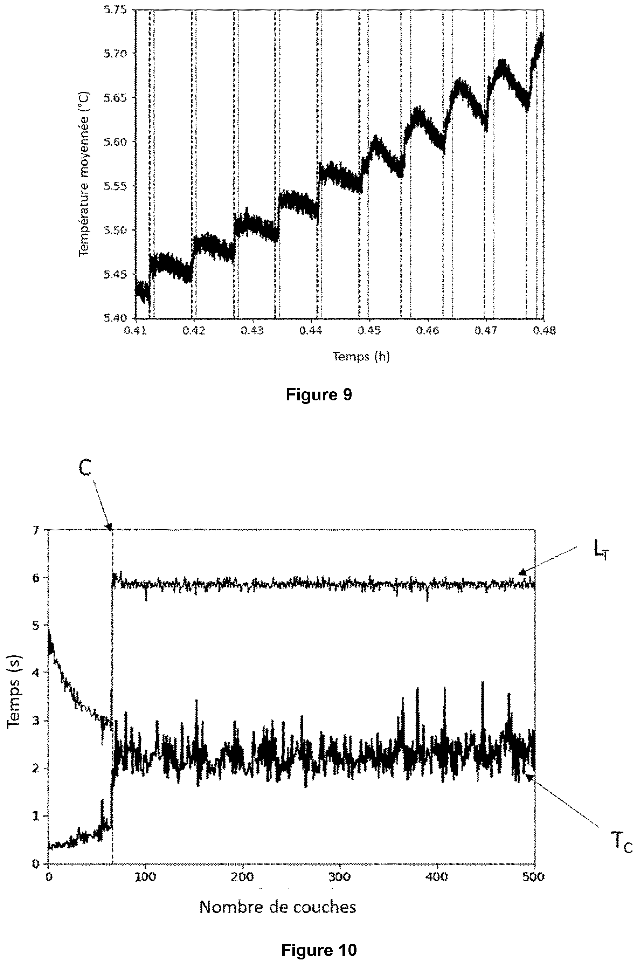

A partir du signal acquis par la caméra IR 3, des variations de l'amplitude lumineuse rayonnée moyennée au cours d'une partie de la fabrication sont proposées sur la figure 8. A partir du signal acquis par le capteur US 7, les variations du temps de propagation de l'onde US au cours de cette première partie de fabrication sont proposées sur la figure 9. Il est observé que ces deux métriques présentent de fortes variations après chaque fusion d'une couche. L'instant de début de chaque fusion est représenté par une ligne verticale pointillée et l'instant de fin de chaque fusion est représenté par une ligne verticale pleine. Ces variations sont liées à la dissipation thermique générée par la pièce témoin 4. L'analyse de ces signaux est donc pertinente pour calculer la donnée de refroidissement.

Ainsi qu'illustré sur la figure 10, le calcul du temps caractéristique de refroidissement Te, déterminé par analyse du signal de la caméra IR 3 sur les 500 premières couches, fait apparaître une croissance de ce temps caractéristique de refroidissement pendant la fabrication de la jupe, un saut à la transition C entre la base et le corps, et une stabilisation par la suite. La durée d'émission du laser L_{T} pour chaque couche au cours de la fabrication est également indiquée.

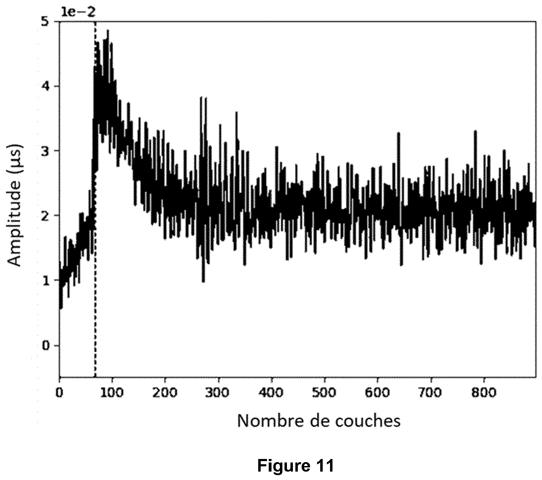

Ainsi qu'illustré sur la figure 11, les variations de l'amplitude du temps de propagation au cours de la phase de refroidissement entre l'instant de fin de fusion d'une couche et le début de fusion de la couche suivante, évaluée via le capteur US sur les 900 premières couches, présentent une croissance pendant la fabrication de la jupe, un saut à la transition entre la jupe et le cylindre, et une décroissance avant stabilisation par la suite.

Les caractéristiques de ces signaux permettent donc d'identifier des changements de conditions de puissance reçues par les pièce témoin au cours de sa fabrication, aussi bien en utilisant la caméra IR 3 que le capteur US 7.

## Revendications

1. Méthode (100) de détection d'une anomalie thermique d'un procédé de fabrication, le procédé de fabrication étant mis en oeuvre au moyen d'une machine (1) de fabrication additive par consolidation de chaque dépôt d'une pluralité de dépôts successifs d'un lit de poudre pour notamment la réalisation d'une pièce, dite pièce témoin (4), ladite méthode (100) comprenant, après la consolidation d'au moins un dépôt de la pluralité de dépôts :
- Obtenir (110) un signal sensible à une variation de température du dépôt consolidé de la pièce témoin (4), le signal étant acquis au cours de la fabrication de la pièce témoin (4) par le procédé de fabrication, le signal obtenu étant un signal d'un rayonnement lumineux de la pièce témoin (4) capté par une photodiode, une pluralité de photodiodes ou une caméra infrarouge, ou un signal d'une onde ultrasonore se propageant dans la pièce témoin (4), l'onde ultrasonore étant émise et captée par un capteur ultrasonore (7) positionné en vis-à-vis de la pièce témoin (4) ;
- Déterminer (120), à partir d'une métrique déterminée à partir du signal obtenu, une donnée de refroidissement, la donnée de refroidissement étant une caractéristique quantifiable de la dynamique de refroidissement du dépôt consolidé avant le dépôt suivant de la pluralité de dépôts ;
- Comparer (130) la donnée de refroidissement à une valeur de référence ; et
- Détecter (140) l'anomalie thermique du procédé de fabrication lorsque la donnée de refroidissement est éloignée de la valeur de référence.

2. Méthode (100) selon la revendication 1 dans laquelle la donnée de refroidissement est un temps caractéristique de refroidissement et la valeur de référence est une durée de référence.

3. Méthode (100) selon la revendication 1 dans laquelle la donnée de refroidissement est une amplitude de variation de la métrique déterminée à partir du signal obtenu et la valeur de référence est une amplitude de référence.

4. Méthode (100) selon la revendication 3, dans laquelle la donnée de refroidissement est une différence entre une valeur à un instant initial, dite valeur initiale, et une valeur à un instant final, dite valeur finale, de la métrique déterminée à partir du signal obtenu, l'instant initial étant compris entre l'instant de fin de consolidation du au moins un dépôt de la pluralité de dépôts successifs et l'instant de début du dépôt suivant, l'instant final étant strictement supérieur à l'instant initial et inférieur ou égal à un instant de début du dépôt suivant.

5. Méthode (100) selon la revendication 2, dans laquelle la donnée de refroidissement est un temps caractéristique de refroidissement, le temps caractéristique de refroidissement étant égal à une différence entre un instant initial et un instant final, l'instant initial étant compris entre l'instant de fin de consolidation du au moins un dépôt de la pluralité de dépôts successifs et l'instant de début du dépôt suivant, l'instant final étant strictement supérieur à l'instant initial et inférieur ou égal à un instant de début du dépôt suivant, et dans laquelle l'instant final est un instant pour lequel la valeur de la métrique, dite valeur finale, est égale à une valeur prédéfinie.

6. Méthode (100) selon la revendication 7, dans laquelle la valeur prédéfinie est égale à la valeur de la métrique à l'instant initial, dite valeur initiale, réduite d'un facteur prédéfini.

7. Méthode (100) selon la revendication 2, dans laquelle la donnée de refroidissement est déterminée à partir d'un rapport entre une valeur à un instant initial, dite valeur initiale, de la métrique déterminée à partir du signal obtenu et une dérivée temporelle de ladite métrique au voisinage de l'instant initial, l'instant initial étant compris entre l'instant de fin de consolidation du au moins un dépôt de la pluralité de dépôts successifs et l'instant de début du dépôt suivant.

8. Méthode (100) selon l'une des revendication 1 à 3 dans laquelle la donnée de refroidissement est déterminée à partir d'une dérivée temporelle au voisinage d'un instant initial de la métrique déterminée à partir du signal obtenu, l'instant initial étant compris entre l'instant de fin de consolidation du au moins un dépôt de la pluralité de dépôts successifs et l'instant de début du dépôt suivant.

9. Méthode (100) selon l'une des revendications 4 à 8, dans laquelle l'instant initial est l'instant de fin d'apport thermique du au moins un dépôt de la pluralité de dépôts successifs ou un instant suivant l'instant de fin d'apport thermique d'une durée prédéfinie.

10. Méthode (100) selon l'une des revendications précédentes, dans laquelle la donnée de refroidissement est moyennée sur plusieurs dépôts de la pluralité de dépôts successifs, les étapes de la méthode (100) étant mises en oeuvre après la consolidation de chacun des plusieurs dépôts de la pluralité de dépôts successifs.

11. Méthode (100) selon l'une des revendications précédentes dans laquelle les étapes de la méthode (100) sont mises en oeuvre après la consolidation de chaque dépôt de la pluralité de dépôts successifs du lit de poudre.

12. Méthode (100) selon l'une des revendications 1 à 11, dans laquelle le signal obtenu est un signal d'un rayonnement lumineux de la pièce témoin (4) capté par la pluralité de photodiodes ou la caméra infrarouge (3) et comprend une pluralité d'images de la pièce témoin (4) acquises au cours de la fabrication, chaque image de la pluralité d'images comprenant une pluralité de pixels, chaque pixel de la pluralité de pixels étant associé à une valeur d'amplitude lumineuse rayonnée par la pièce témoin (4), et dans laquelle la métrique est une moyenne pour chaque image de la pluralité d'images des valeurs d'amplitude lumineuse rayonnée de la pluralité de pixels.

13. Méthode (100) selon l'une des revendications 1 à 11, dans laquelle le signal obtenu est un signal d'une onde ultrasonore se propageant dans la pièce témoin (4), l'onde ultrasonore étant émise et captée par un capteur ultrasonore (7), dans laquelle le signal ultrasonore comprend une variation d'un champ acoustique provoquée par la propagation de l'onde ultrasonore dans la pièce témoin (4) après réflexion sur une surface formée par la fusion du au moins un dépôt, et dans laquelle la métrique est un temps de propagation de l'onde ultrasonore depuis un instant de génération jusqu'à un instant de captation.

14. Méthode (100) selon l'une des revendications précédentes comprenant l'émission (150) d'une alerte relative à l'anomalie thermique détectée.

15. Dispositif de détection d'une anomalie thermique d'un procédé de fabrication d'une pièce témoin (4) configuré pour mettre en oeuvre la méthode (100) selon l'une des revendications précédentes.

16. Dispositif de détection d'une anomalie thermique pour mettre en oeuvre la méthode (100) selon l'une des revendications 1 à 11 ou 13, comprenant un capteur ultrasonore (7) destiné à émettre et à capter l'onde ultrasonore, le capteur ultrasonore (7) étant positionné en vis-à-vis de la pièce témoin (4) sous un plateau (6), ledit plateau (6) étant configuré pour protéger le capteur ultrasonore (7) d'une atmosphère générée par le procédé de fabrication et assurer un continuité mécanique entre le capteur ultrasonore (7) et la pièce témoin (4).

17. Produit programme informatique comportant des instructions pour mettre en oeuvre la méthode (100) selon l'une des revendications 1 à 14 lorsque ce programme est exécuté par un processeur.
